# DEMANDE DE BREVET EUROPEEN

(11) **EP 2 884 081 A1**
(43) Date de publication de la demande: **17.06.2015**
(21) Numéro de dépôt: 14194844.8
(22) Date de dépôt: 26.11.2014
(51) Int. Cl.: F02D 41/00, F02B 37/16, F02M 25/07

(54) **Procédé de pilotage de la vanne du circuit de limitation de pompage compresseur pour moteur**

(30) Priorité: 10.12.2013 FR 1362335
(71) Demandeur: PEUGEOT CITROËN AUTOMOBILES SA, 78140 Velizy-Villacoublay (FR)
(72) Inventeur: Denys, Fabien, 59300 Valenciennes (FR); Tarallo, Romain, 77700 Bailly Romainvilliers (FR); Jan, Marc, 92350 Le Plessis Robinson (FR)

(57) **Abrégé**

L'invention porte sur un procédé de pilotage d'une vanne de jonction (103) d'un circuit de limitation (100) de pompage compresseur de moteur, le circuit (100) véhiculant un flux d'air comprimé d'un compresseur (70) jusqu'à un piquage (102) sur une ligne de réintroduction des gaz d'échappement (40) sensiblement à proximité de la sortie de son cylindre dédié (14), la vanne (103) se trouvant à l'entrée dudit circuit (100) en autorisant ou interdisant le passage de l'air comprimé. Le pilotage de la vanne de jonction (103) se fait par au moins une variable d'ouverture de la vanne de jonction (103) déterminée en fonction du régime.

## Description

L'invention concerne un procédé de pilotage de la vanne du circuit de limitation de pompage compresseur pour un moteur à ligne RGE dédiée.

Un système RGE ou système de réintroduction des gaz à l'échappement correspondant à la locution anglo-américaine Exhaust Gaz Recirculation est connu de l'état de la technique. On a aussi proposé, dans les moteurs à plusieurs cylindres, de dédier un cylindre à la recirculation directe de ses gaz d'échappement, les gaz d'échappement de ce cylindre étant totalement réintroduits dans le collecteur d'admission du moteur sans passer par la ligne d'échappement, le moteur étant alors dénommé à cylindre dédié à une ligne RGE ou à ligne RGE dédiée ou encore connu sous la dénomination D-RGE.

Le concept D-RGE permet de générer des gaz RGE dopés en hydrogène en faisant fonctionner un cylindre en mode riche, avantageusement une richesse de l'ordre de 1,5. Cet hydrogène permet d'améliorer la stabilité de la combustion et donc la tolérance au système RGE.

Le moteur D-RGE permet de réduire les pertes par pompage à l'admission du moteur pour les points de charge partielle et de repousser la limite à partir de laquelle apparaît un cliquetis pour les points de pleine charge. Il est avantageux d'avoir une machine de suralimentation suffisamment performante pour rétablir le débit d'air nécessaire et ainsi conserver voire augmenter les performances du moteur.

Les turbocompresseurs sont exposés à un risque de comportement spécifique du compresseur, à savoir le pompage du compresseur. Le pompage du compresseur est initié par une variation de l'écoulement au niveau des aubes du compresseur et notamment de l'angle d'incidence de l'air.

En termes d'écoulement, cette variation aboutit au décollement de la couche limite, à une restriction de la section de passage entre deux aubes, puis, dans l'étage du compresseur, à une réduction voire une inversion brutale des débits, l'effort communiqué au fluide ne compensant plus le gradient de pression. On constate également une oscillation du débit d'air en amont et en aval ce qui génère un bruit caractéristique.

Ce risque est encore accru dans le cas d'un moteur à réintroduction de gaz d'échappement, et encore plus spécifiquement dans le cas d'une réintroduction des gaz provenant d'un cylindre dédié.

En effet, de par l'architecture d'un moteur D-RGE, les gaz d'échappement réintroduits sont délivrés à une fréquence beaucoup plus faible que sur un moteur classique. En effet, la bouffée de gaz d'échappement réintroduit est délivrée en seulement x pulsations, x étant le nombre de cylindres dédiés, sur y points morts hauts, y étant le nombre de cylindres.

Il en résulte un comportement spécifique en termes de débit à l'admission et notamment une réduction du débit de sortie du compresseur liée à l'apparition d'un débit discontinu des gaz réintroduits. Il s'ensuit une dégradation acoustique par l'apparition de bruits audibles par le conducteur et un endommagement du système de palier du turbocompresseur pouvant conduire à un phénomène de départ sur l'huile si le système de palier n'est pas suffisamment renforcé.

Le but de l'invention est d'éviter de tels dysfonctionnements d'un compresseur de suralimentation liés à la réintroduction de gaz d'échappement à l'admission avec un moteur présentant au moins un cylindre dédié à une ligne RGE, en fournissant un procédé de pilotage de la vanne d'entrée du circuit de limitation du pompage compresseur qui soit toujours adapté aux conditions de fonctionnement du moteur.

Pour atteindre cet objectif, il est prévu selon l'invention un procédé de pilotage d'une vanne de jonction d'un circuit de limitation de pompage compresseur pour un moteur thermique, le moteur comprenant une admission d'air frais et un compresseur de suralimentation en amont de l'admission d'air frais et au moins un cylindre dédié à une ligne RGE de réintroduction de gaz d'échappement à l'admission, le circuit de limitation de pompage véhiculant un flux d'air comprimé émis par le compresseur de suralimentation jusqu'à un piquage placé sur la ligne de réintroduction de gaz d'échappement à l'admission (RGE) sensiblement à proximité de la sortie du cylindre dédié à la ligne, la vanne de jonction se trouvant à l'entrée dudit circuit en autorisant ou interdisant le passage de l'air comprimé émis par le compresseur de suralimentation dans le circuit, tel que le pilotage de la vanne de jonction se fait par au moins une variable d'ouverture de la vanne de jonction déterminée en fonction du régime moteur.

Selon un autre mode de réalisation, le pilotage de la vanne de jonction se fait par au moins une variable d'ouverture de la vanne de jonction déterminée en fonction d'une différence de pression entre la pression de sortie du cylindre dédié à la ligne de réintroduction de gaz d'échappement à l'admission (RGE) et la pression d'admission en entrée en aval du compresseur.

Le pilotage se fait donc soit, selon un premier mode, en fonction du régime moteur soit, selon un deuxième mode, en fonction de la différence de pression évoquée plus haut. Il est également possible de passer d'un pilotage à un autre, ou encore de valider / vérifier le pilotage selon un des modes par le pilotage selon l'autre mode.

Avantageusement, le pilotage est subordonné à une autorisation d'activation fonction au moins du régime moteur régnant alors.

Avantageusement, l'autorisation se fait aussi en fonction d'au moins l'état du moteur et/ou de la température du moteur régnant alors.

Avantageusement, le régime moteur est mesuré par un capteur de régime.

Avantageusement, quand le pilotage de la vanne de jonction se fait en fonction du régime moteur, il est calculé par une cartographie respective un phasage d'ouverture de vanne et une durée d'ouverture de vanne en tant que variables d'ouverture de la vanne de jonction.

Avantageusement, quand le pilotage de la vanne de jonction se fait selon une différence de pression entre la pression de sortie du cylindre dédié à la ligne RGE et la pression d'admission en entrée en aval du compresseur, il est calculé par cartographie une ouverture de vanne donnant une consigne de position de vanne pour la régulation de la vanne de jonction en tant que variable d'ouverture.

Avantageusement, la pression de sortie du cylindre dédié à la ligne de réintroduction de gaz d'échappement à l'admission RGE et la pression d'admission en aval du compresseur sont mesurées ou estimées.

Avantageusement, le pilotage de la vanne de jonction en fonction du régime moteur et le pilotage en fonction d'une différence de pression entre la pression de sortie du cylindre dédié à la ligne de réintroduction de gaz d'échappement à l'admission RGE et la pression d'admission en entrée en aval du compresseur se font en alternance, un interrupteur permettant de sélectionner l'un ou l'autre des pilotages.

Avantageusement, ladite au moins une variable d'ouverture de la vanne de jonction est réactualisée tous les PMH ou tous les multiples d'un PMH du moteur thermique.

L'invention concerne aussi un moteur thermique de véhicule automobile comprenant une admission d'air frais et un compresseur de suralimentation en amont de l'admission d'air frais et au moins un cylindre dédié à une ligne RGE de réintroduction de gaz d'échappement à l'admission, un circuit de limitation de pompage compresseur véhiculant un flux d'air comprimé émis par le compresseur de suralimentation jusqu'à un piquage placé sur la ligne de réintroduction de gaz d'échappement à l'admission RGE sensiblement à proximité de la sortie du cylindre dédié, ce circuit de limitation comprenant une vanne de jonction se trouvant à son entrée autorisant ou interdisant le passage de l'air comprimé émis par le compresseur de suralimentation dans le circuit, caractérisé en ce que la vanne de jonction est pilotée conformément à un tel procédé de régulation.

Avantageusement, le moteur comporte un module de pilotage qui commande la vanne de jonction de telle sorte que la vanne de jonction n'adopte sa position de jonction que dans une ou des gammes pré-établies de fonctionnement du moteur.

D'autres caractéristiques, buts et avantages de l'invention apparaîtront à la lecture de la description qui va suivre, et au regard des dessins annexés donnés à titre d'exemples non limitatifs et sur lesquels :

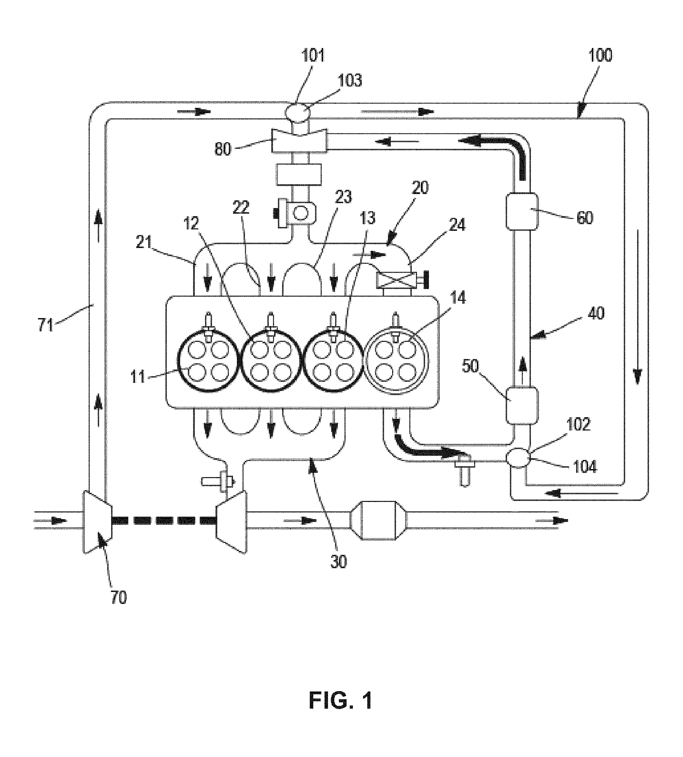

- la figure 1 est une représentation schématique d'un moteur D-RGE selon la présente invention,

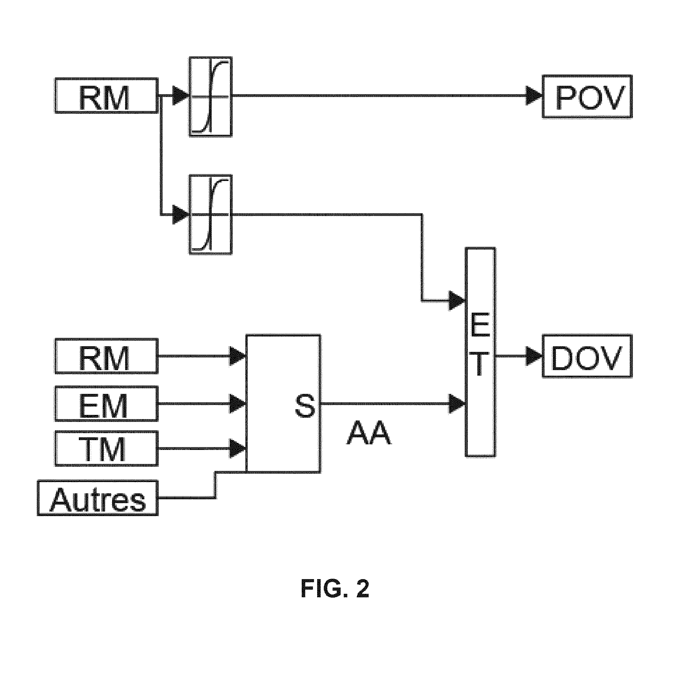

- la figure 2 est une représentation schématique montrant les étapes du procédé de pilotage de la vanne du circuit de limitation de pompage compresseur pour un moteur à cylindre dédié à une ligne de réintroduction de gaz d'échappement à l'admission RGE selon un premier mode de réalisation de la présente invention,

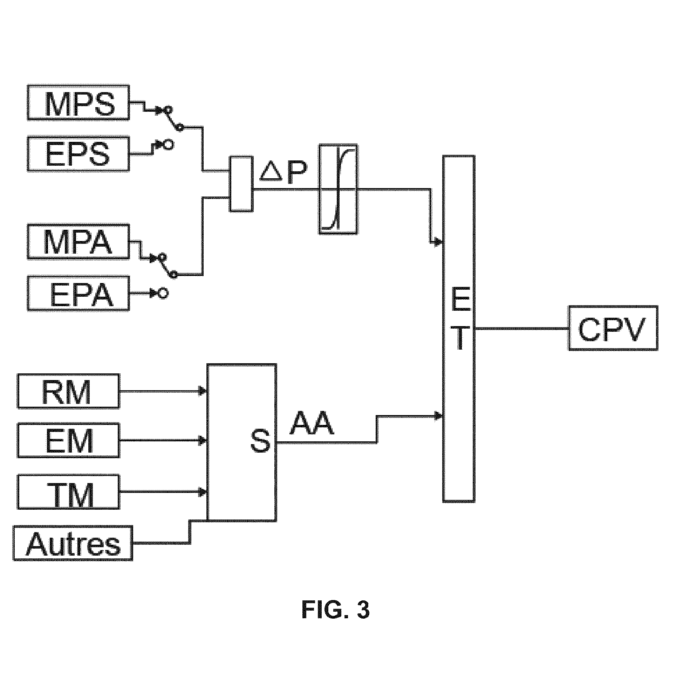

- la figure 3 est une représentation schématique montrant les étapes du procédé de pilotage de la vanne du circuit de limitation de pompage compresseur pour un moteur à cylindre dédié à une ligne de réintroduction de gaz d'échappement à l'admission RGE, selon un deuxième mode de réalisation de la présente invention.

Le moteur thermique représenté à la figure 1 comporte un bloc-moteur muni de quatre cylindres 11, 12, 13, 14. Le moteur comporte en outre un répartiteur d'admission 20 débouchant dans chacun des cylindres 11, 12, 13 14 par une conduite d'admission respective 21, 22, 23, 24. Un collecteur d'échappement 30 collecte les gaz d'échappement émanant de chacun des cylindres 11, 12 et 13.

Le cylindre 14 est associé à une conduite 40 de réintroduction de gaz d'échappement à l'admission ou ligne RGE. Ainsi, la ligne RGE 40 prélève les gaz d'échappement du cylindre 14 dit cylindre dédié et les dirige vers l'admission du moteur, notamment vers le répartiteur d'admission 20.

Le cylindre 14 est donc ici un cylindre dit de type D-RGE. Un module de contrôle du moteur pilote une alimentation en air et en carburant du cylindre 14 de telle sorte que le cylindre 14 puisse être le siège d'une combustion à mélange riche, c'est-à-dire en excès de carburant par rapport à l'air, ici selon une richesse d'environ 1,5. De par la richesse du mélange air-carburant, le cylindre 14 produit du gaz hydrogène H₂. Le gaz H_{dit} ainsi produit se retrouve dans les gaz d'échappement émis par le cylindre 14 lesquels sont ensuite, selon le principe du moteur D-RGE, réintroduits à l'admission d'au moins un cylindre du moteur, ici à l'admission de l'ensemble des cylindres 11 à 14. Le moteur selon le présent exemple de réalisation ne comporte qu'un seul cylindre produisant de l'hydrogène selon le principe D-RGE. En variante le moteur peut en comporter plusieurs.

Dans l'architecture du système D-RGE proposée ici, la conduite de réintroduction de gaz d'échappement, aussi appelée ligne RGE 40, comporte en outre un catalyseur de production d'hydrogène 50 et un refroidisseur de gaz d'échappement 60. Le catalyseur de production d'hydrogène 50 est ici un catalyseur de type WGS pour Water Gas Shift en anglais également appelé catalyseur à déplacement du gaz à l'eau.

Le présent moteur comporte en outre un turbocompresseur 70 lequel est entraîné par les gaz d'échappement émanant des cylindres 11, 12 et 13 et met en pression un flux d'air frais lequel arrive à l'admission du moteur une fois comprimé. Le turbocompresseur 70 fournit l'air frais sous pression via une conduite 71 à un mélangeur 80 dont le rôle est de mélanger l'air sous pression et les gaz d'échappement de la conduite de réintroduction 40. Un refroidisseur d'air de suralimentation est disposé en aval du mélangeur 80 de sorte que le mélange circule dans le refroidisseur d'air de suralimentation et débouche une fois refroidi dans le répartiteur d'admission 20.

Le moteur comporte en outre ici une conduite de jonction 100 servant de circuit de limitation de pompage compresseur. Ce circuit de limitation 100 de pompage s'étend depuis un piquage 101 réalisé sur une conduite de sortie 71 du turbocompresseur 70 et s'étend jusqu'à un piquage 102 réalisée sur la conduite 40 en amont du mélangeur 80 et plus précisément en amont du catalyseur de production d'hydrogène 50. Le circuit de limitation 100 de pompage véhicule l'air frais sous pression émanant du turbocompresseur 70 pour introduire cet air frais sous pression dans la conduite 40.

En plaçant un tel circuit de limitation 100 de pompage laquelle débouche sur la conduite 40 de réintroduction de gaz d'échappement en amont du mélangeur 80, le turbocompresseur 70 se trouve protégé contre les surpressions brutales dues aux bouffées de gaz d'échappement du cylindre dédié 14 et qui sont habituellement véhiculées par le mélangeur 80 depuis le cylindre dédié vers le turbocompresseur 70. Le débit de sortie du turbocompresseur 70 ne diminue pas et le turbocompresseur n'entre pas en zone de pompage. Le turbocompresseur 70 se trouve alors protégé dans son fonctionnement et sa durabilité.

Une vanne de jonction 103 équipe le circuit de limitation 100 de pompage en aval du compresseur 70 et en amont du piquage de réintroduction RGE, ici au niveau de son piquage 101 sur la conduite de sortie 71 du turbocompresseur, donc en entrée du circuit de limitation 100. La vanne de jonction 103, avantageusement rapide, est ici commandée par le calculateur moteur mais elle peut en variante être commandée par un système d'activation mécanique relié par exemple à la distribution du moteur.

La vanne de jonction 103 reste fermée lors des phases d'échappement des cylindres non dédiés 11, 12 et 13 et prend une position ouverte lors de la phase d'échappement du cylindre dédié 14. De cette façon, l'air frais comprimé est dirigé vers les cylindres sans emprunter le circuit de limitation 100 de pompage en l'absence de bouffée émise par le cylindre dédié 14 et l'air frais comprimé atteint l'admission via le circuit de limitation 100 de pompage au moment où apparaît la bouffée de gaz d'échappement du cylindre dédié 14. Il n'est donc fait usage ici du circuit de limitation 100 de pompage qu'à l'instant où la bouffée d'échappement du cylindre dédié 14 apparaît dans le cycle moteur, le fonctionnement du moteur restant traditionnel au cours du cycle en dehors de la présence de cette bouffée.

De même, selon une variante de réalisation, la vanne de jonction 103 équipant le circuit de limitation 100 de pompage n'est actionnée en ouverture que pour une plage du champ de fonctionnement moteur dans lequel le turbocompresseur 70 devient sensible aux bouffées de gaz d'échappement du cylindre dédié 14. Ainsi, selon un mode de réalisation avantageux, il n'est fait usage du circuit de limitation 100 de pompage que dans une plage de régime moteur préétablie où le turbocompresseur 70 devient sensible aux bouffées d'échappement émises par le cylindre dédié 14.

Avantageusement, dans une telle plage de sensibilité du turbocompresseur 70, la vanne de jonction 103 est placée en position ouverte seulement lors des phases d'échappement du cylindre dédié 14, le circuit de limitation 100 de pompage restant inutilisé pendant les phases d'échappement des autres cylindres 11, 12, 13.

Dans le présent mode de réalisation, afin d'augmenter encore la protection du turbocompresseur 70 le circuit de limitation 100 de pompage est en outre équipé d'un clapet anti-retour 104. Celui est placé au niveau du piquage 102 du circuit de limitation 100 de pompage sur la conduite de réintroduction de gaz d'échappement 40.

Le dispositif décrit permet donc notamment d'éviter une dégradation acoustique par l'apparition de sons ressemblant à des aboiements dans le cas d'un système RGE et d'éviter un endommagement du turbocompresseur 70.

Les figures 2 ou 3 montrent des modes de réalisation conformes à la présente invention d'un procédé de pilotage de la vanne de jonction du circuit de limitation de pompage compresseur pour un système D-RGE, ce qui permet d'optimiser l'utilisation de ce circuit. Dans ce qui suit, il sera aussi fait référence à la figure 1 en combinaison avec les figures 2 et 3 pour l'illustration des divers éléments du moteur thermique.

Selon la présente invention et pour les deux modes de réalisation du procédé de pilotage, le pilotage de la vanne de jonction 103 se fait par au moins une variable d'ouverture DOV, POV, CPV de la vanne de jonction 103 déterminée en fonction du régime moteur RM ou d'une différence de pression ΔP entre la pression de sortie MPS, EPOS du cylindre dédié 14 à la ligne RGE 40 et la pression d'admission en entrée MPA, EPA en aval du compresseur 70.

Avantageusement, le pilotage est subordonné à une autorisation d'activation AA fonction au moins du régime moteur RM régnant alors, cette autorisation étant établie à la sortie S d'un activateur. Le régime moteur RM peut être mesuré par un capteur de régime. Il est ainsi possible de ne pas ouvrir la vanne de jonction 103 si le cas de vie du moteur ne le nécessite pas. De manière préférentielle, l'autorisation d'activation AA peut être discrétisée au fonctionnement du moteur, par exemple en étant recalculée tous les points morts hauts du moteur ou PMH, pour lesquels le piston est au point le plus haut de sa course dans son cylindre, donc avec un volume de chambre de combustion le plus faible, ceci avant la combustion du carburant dans le cylindre.

Avantageusement, afin de réduire la charge d'un calculateur dédié à la détermination de cette autorisation d'activation AA, par exemple le calculateur du contrôle moteur, il est possible d'activer cette autorisation pour un point mort haut ou PMH sur les 2 tours du moteur, si ce moteur est un moteur 4 temps.

L'autorisation d'activation AA peut aussi se faire en fonction d'au moins l'état du moteur EM et/ou de la température du moteur TM régnant alors. Il est possible aussi de prendre en compte d'autres paramètres de fonctionnement qui sont référencés Autres aux figures 2 et 3.

En se référant plus spécifiquement aux figures 1 et 2, quand le pilotage de la vanne de jonction 103 se fait en fonction du régime moteur RM, il est calculé par une cartographie respective un phasage d'ouverture de vanne POV et une durée d'ouverture de vanne DOV en tant que variables d'ouverture de la vanne de jonction 103.

Ainsi, le premier mode de pilotage est principalement basé sur la position angulaire du moteur. Le procédé de pilotage intègre aussi une ou des cartographies afin de calibrer le phasage d'ouverture POV et la durée d'ouverture DOV de la vanne de jonction 103. Particulièrement cette dernière cartographie permet d'inclure un délai nécessaire pour avoir une ouverture totale de la vanne de jonction 103 et anticiper son ouverture et sa fermeture.

Le phasage d'ouverture POV et la durée d'ouverture DOV de la vanne de jonction 103 peuvent être mis à jour tous les points morts hauts du moteur ou PMH.

En se référant plus spécifiquement aux figures 1 et 3, quand le pilotage de la vanne de jonction 103 se fait selon une différence de pression ΔP entre la pression de sortie MPS, EPOS du cylindre 14 dédié à la ligne RGE 40 et la pression d'admission en entrée MPA, EPA en aval du compresseur 70, il est calculé par cartographie une ouverture de vanne donnant une consigne de position de vanne CPV pour la régulation de la vanne de jonction 103 en tant que variable d'ouverture.

La régulation selon ce deuxième mode de réalisation est donc basée sur les conditions thermodynamiques à l'admission et à l'échappement du moteur. Ainsi, il est possible de déterminer le meilleur instant pour ouvrir la vanne de jonction 103 en fonction des conditions thermodynamiques en admission et en échappement de la ligne RGE 40 associée au cylindre dédié 14.

La pression de sortie MPS, EPOS du cylindre 14 dédié à la ligne RGE 40 et la pression d'admission MPA, EPA en aval du compresseur 70 peuvent être mesurées par des capteurs de pression ou estimées, par exemple par un contrôle moteur selon un ou des paramètres de fonctionnement du moteur régnant alors.

Avantageusement, le pilotage de la vanne de jonction 103 en fonction du régime moteur RM et le pilotage en fonction d'une différence de pression ΔP entre la pression de sortie MPS, EPOS du cylindre 14 dédié à la ligne RGE 40 et la pression d'admission en entrée MPA, EPA en aval du compresseur 70 se font en alternance, un interrupteur permettant de sélectionner l'un ou l'autre des pilotages.

Ainsi, les deux modes de réalisation du procédé de régulation peuvent être envisagés pour le pilotage de la vanne de jonction 103, ces deux modes pouvant être utilisés unitairement ou de manière alternée. Dans ce dernier cas, il est possible de passer de l'un à l'autre mode par un interrupteur pouvant être calibré.

Ladite au moins une variable d'ouverture DOV, POV, CPV de la vanne de jonction 103 peut être réactualisée tous les PMH ou tous les multiples d'un PMH du moteur thermique.

Il serait possible également d'utiliser un système mécanique lié à l'arbre à came pour assurer l'ouverture synchronisée de la vanne de jonction 103. La flexibilité de l'ouverture et de la fermeture de la vanne de jonction 103 à un instant donné peut être pilotée aussi par un système hydraulique. Un système débrayable peut permettre également de laisser le circuit fermé pour des problématiques de cas de vie spécifiques.

L'invention n'est nullement limitée aux modes de réalisation décrits et illustrés qui n'ont été donnés qu'à titre d'exemples.

## Revendications

1. Procédé de pilotage d'une vanne de jonction (103) d'un circuit de limitation (100) de pompage compresseur pour un moteur thermique, le moteur comprenant une admission d'air frais et un compresseur de suralimentation (70) en amont de l'admission d'air frais et au moins un cylindre dédié (14) à une ligne (40) de réintroduction de gaz d'échappement à l'admission, le circuit de limitation (100) de pompage véhiculant un flux d'air comprimé émis par le compresseur de suralimentation (70) jusqu'à un piquage (102) placé sur la ligne de réintroduction de gaz d'échappement à l'admission (40) sensiblement à proximité de la sortie du cylindre dédié (14) à la ligne (40), la vanne de jonction (103) se trouvant à l'entrée dudit circuit (100) en autorisant ou interdisant le passage de l'air comprimé émis par le compresseur de suralimentation (70) dans le circuit (100), **caractérisé en ce que** le pilotage de la vanne de jonction (103) se fait par au moins une variable d'ouverture (DOV, POV, CPV) de la vanne de jonction (103) déterminée en fonction du régime moteur (RM).

2. Procédé de régulation selon la revendication 1, lequel est subordonné à une autorisation d'activation (AA) fonction au moins du régime moteur (RM) régnant alors.

3. Procédé de régulation selon la revendication 2, pour lequel l'autorisation (AA) se fait aussi en fonction d'au moins l'état du moteur (EM) et/ou de la température du moteur (TM) régnant alors.

4. Procédé de régulation selon l'une quelconque des revendications 1 à 3, dans lequel le pilotage de la vanne de jonction (103) en fonction du régime moteur (RM) est calculé par une cartographie respective un phasage d'ouverture de vanne (POV) et une durée d'ouverture de vanne (DOV) en tant que variables d'ouverture de la vanne de jonction (103).

5. Procédé de régulation selon l'une quelconque des revendications précédentes, dans lequel le pilotage de la vanne de jonction (103) se fait en fonction du régime moteur (RM) et en fonction d'une différence de pression entre la pression de sortie (MPS, EPOS) du cylindre (14) dédié à la ligne de réintroduction de gaz d'échappement à l'admission (40) et la pression d'admission en entrée (MPA, EPA) en aval du compresseur (70), pilotages qui se font en alternance, un interrupteur permettant de sélectionner l'un ou l'autre des pilotages.

6. Procédé de régulation selon l'une quelconque des revendications précédentes, dans lequel ladite au moins une variable d'ouverture (DOV, POV, CPV) de la vanne de jonction (103) est réactualisée tous les PMH ou tous les multiples d'un PMH du moteur thermique.

7. Moteur thermique de véhicule automobile comprenant une admission d'air frais et un compresseur de suralimentation (70) en amont de l'admission d'air frais et au moins un cylindre (14) dédié à une ligne de réintroduction de gaz d'échappement à l'admission (40) de réintroduction de gaz d'échappement à l'admission, un circuit de limitation (100) de pompage compresseur véhiculant un flux d'air comprimé émis par le compresseur de suralimentation (70) jusqu'à un piquage (102) placé sur la ligne de réintroduction de gaz d'échappement à l'admission (40) sensiblement à proximité de la sortie du cylindre dédié (14), ce circuit de limitation (100) comprenant une vanne de jonction (103) se trouvant à son entrée autorisant ou interdisant le passage de l'air comprimé émis par le compresseur de suralimentation (70) dans le circuit (100), **caractérisé en ce que** la vanne de jonction (103) est pilotée conformément à un procédé de régulation selon l'une quelconque des revendications précédentes.

8. Moteur selon la revendication 7, lequel comporte un module de pilotage qui commande la vanne de jonction (103) de telle sorte que la vanne de jonction (103) n'adopte sa position de jonction que dans une ou des gamme(s) pré-établie(s) de fonctionnement du moteur.
